# EUROPEAN PATENT APPLICATION

(11) **EP 1 912 153 A2**
(43) Date of publication of application: **16.04.2008**
(21) Application number: 07118324.8
(22) Date of filing: 11.10.2007
(51) Int. Cl.: G06F 21/00, G06F 17/30

(54) **Data security method, system and storage medium for preventing a desktop search tool from exposing encrypted data**

(30) Priority: 12.10.2006 CN 200610149914
(71) Applicant: Egis Inc., George Town, 1-1112 Grand Cayman (KY)
(72) Inventor: Chao, Hsi-Wei, TAIPEI CITY (TW); Ho, Yu-Wei, TAIPEI CITY (TW); Wu, Jia-Chang, TAIPEI CITY (TW)
(74) Representative: Le Forestier, Eric

(57) **Abstract**

In a data security method for preventing a desktop search tool from exposing encrypted data, when a virtual secure disk receives a control instruction, it is first determined if the control instruction came from the desktop search tool. If not, tasks are performed on the virtual secure disk according to the control instruction. On the other hand, if yes, processing is ended to prevent the desktop search tool from indexing the virtual secure disk, thereby achieving the effects of ensuring data security and privacy.

## Description

The invention relates to a data security method for encrypted data, more particularly to a data security method, system and storage medium for preventing a desktop search tool from exposing encrypted data.

As computers and high capacity storage equipment become more common, large amounts of digitized data are now stored by users in storage equipment of computers. However, with the increase in the amount of digitized data accumulated by a computer, the user may be unable to quickly and accurately find the storage position of data, and may even forget which file stores data of a specific content. Desktop search tools, such as Google desktop search tool, Microsoft Windows desktop search tool, Yahoo desktop search tool, AOL desktop search tool, etc., are tools developed to cope with the above problems. Users can install such desktop search tools in a personal computer, and use a keyword search to quickly find files or items, including electronic mail and attachments, with relevant content in the computer in a manner similar to searching a network.

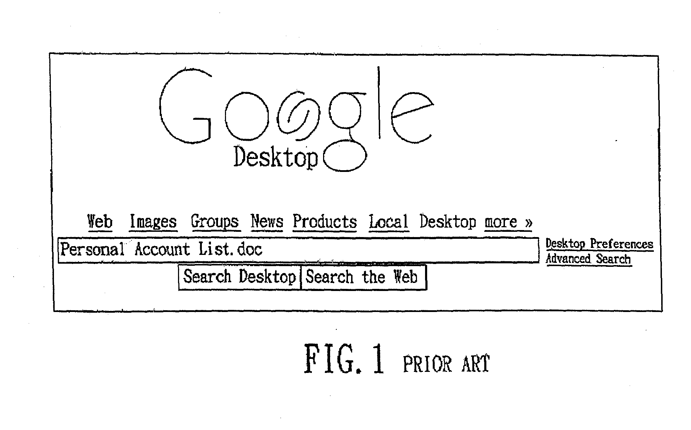

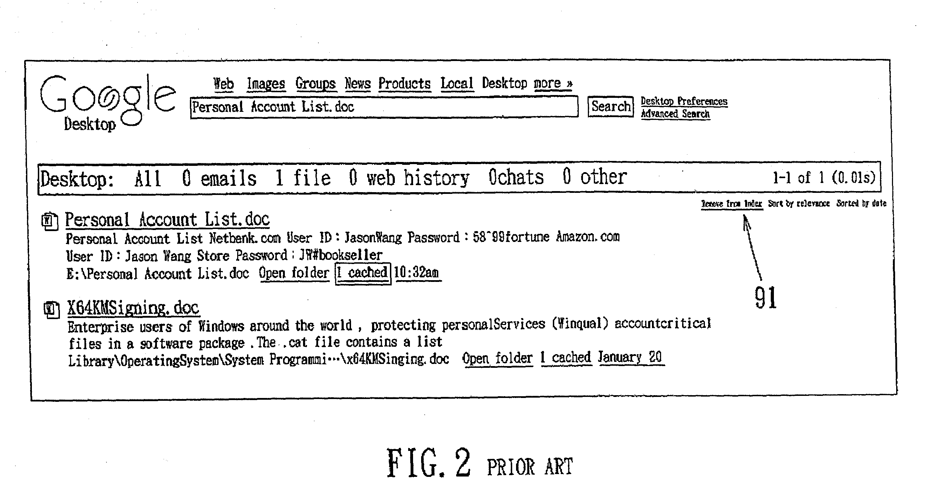

Current desktop search tools use the following schemes to achieve the object of enabling users to make quick searches:
1. through an indexing method by bac kground operation conducted in real time, at preset times or at non-preset times so as to complete indexing of files or items that can be searched in a computer of the user beforehand;
2. simultaneous with indexing, automatically making a backup of contents of indexed files or items in a private database of the desktop search tool so as to provide the function of browsing data in the database. Taking the Google desktop search tool as an example, assuming that there is a newly created file having a file name "Personal Account List.doc" and edited content "Personal Account List;Netbank.com; User ID: Jason Wang Password: 58^^$$99fortune Amazon.com User ID: Jason Wang Store Password: JW#bookseller", this file will be indexed and stored by the Google desktop search tool. Accordingly, as shown in Figure 1, when "Personal Account List.doc" is inputted into the Google desktop search tool of the computer to conduct a search, the search results will be such as that shown in Figure 2, where this file will be displayed and where a link to the backup (i.e., "a quick access file") generated for the file by the Google desktop search tool will be displayed at the same time.
3. when the user searches for the first time and previews a particular file, making a backup of the previewed contents in a private database of the desktop search tool (such as the Microsoft Windows desktop search tool).

Presently, in view of the need for privacy and security, users usually install a data security program having file encryption functionality, such as a file encryption/decryption program or a virtual secure disk program, in their computers, so that plaintext data can be converted into encrypted data not accessible by others. However, the security of encrypted data is compromised by the possibility of exposure of the encrypted data due to the presence of the current desktop search tools. As an example, the following are situations where the desktop search tools might expose encrypted data.

In the first situation, when the user creates a new file or when a file has yet to be encrypted (i.e., the file is plaintext data), the file contents will be indexed by the desktop search tool and a backup thereof will be stored in the database of the desktop search tool. Thereafter, if the user decides to encrypt the file, the file will be encrypted into encrypted data. However, there is still backup plaintext data stored in the database of the desktop search tool. Although the encrypted file is unreadable by others, file content in the form of plaintext data of the encrypted file can be retrieved from the database of the desktop search tool.

In the second situation, when the user decrypts an encrypted file into a plaintext state for normal editing, before further encryption of the file, the file that is being edited will be indexed by the desktop search tool and a backup of contents thereof will be stored in the database of the desktop search tool. Therefore, hacking is possible using the contents backed up in the database of the desktop search tool.

The third situation occurs when the virtual secure disk is used. The user stores files to be protected into a virtual secure disk capable of encryption. When the virtual secure disk is an encrypted state, all of the files stored therein are in ciphertext. When the user desires to access the files in the virtual secure disk, it is required to decrypt the virtual secure disk with the use of a password to convert the virtual secure disk into a non-encrypted state so that the user is able to access the files in the virtual secure disk normally. Accordingly, valid users first decrypt the virtual secure disk to access the files therein. At this time, if the desktop search tool indexes all of the files in the virtual secure disk and makes a backup of the contents of all of the files in the database thereof, although the user subsequently encrypts the virtual secure disk back into the encrypted state, since plaintext data of all of the files in the virtual secure disk are already stored in the database of the desktop search tool, hackers can use the contents stored in the database of the desktop search tool.

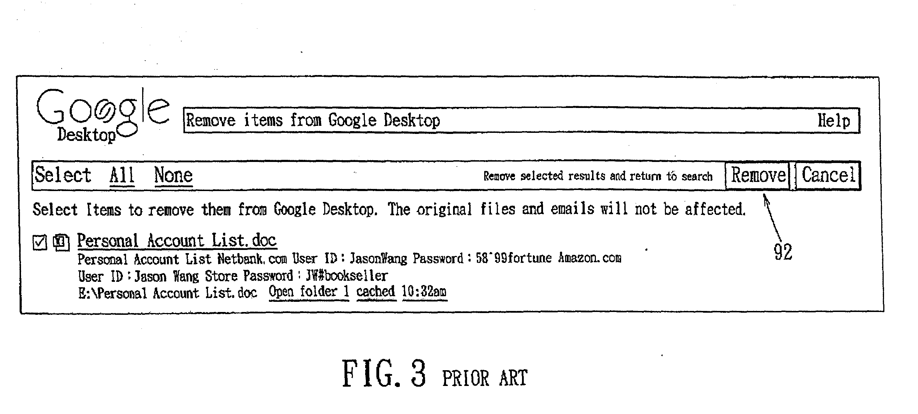

Therefore, current desktop search tools provide users with the option of setting up the same so that portions of data are not indexed. For example, in a system registry of the Google desktop search tool, there is a black list of files excluded from indexing, which is a record of data previously set by the user as being excluded from indexing. However, this scheme requires manual operation by the user to add the data to be excluded from indexing into the black list, and data that were indexed and backed up before addition into the black list remain in the database of the desktop search tool. Some current desktop search tools, such as the Google desktop search tool, further provide users with the function of manual deletion of previous indexes and backup data. The search results page of Figure 2 shows an option 91 for index removal. When the user wishes to remove searched data from the desktop search tool, it is required to click on the option 91 so as to link to the index removal page shown in Figure 3. At this time, the user needs to select the data to be deleted and click on a remove option 92 to confirm so as to enable removal of the entry of previously indexed data. This scheme still requires manual operation by the user and is inconvenient to use.

Therefore, an object of the present invention is to provide a data security method, system and storage medium that can protect encrypted data from undesired exposure by preventing a desktop search tool from exposing the encrypted data.

Another object of the present invention is to provide a data security method, system and storage medium that can prevent a desktop search tool from exposing encrypted data so as to achieve better data privacy and security.

Therefore, when the data security method for preventing a desktop search tool from exposing encrypted data of the present invention is applied to a virtual secure disk, upon input of a control instruction, the control instruction that came from the desktop search tool is first filtered out so that the control instruction that came from the desktop search tool will not be executed by the virtual secure disk, thereby preventing the desktop search tool from indexing the virtual secure disk.

Accordingly, the data security method for preventing a desktop search tool from exposing encrypted data of the present invention comprises the following steps:
(A) providing a data security system with a secure disk function;
(B) when the data security system receives a control instruction, determining if the control instruction was issued by the desktop search tool, controlling operation of the data security system according to the control instruction if the control instruction was not issued by the desktop search tool, and sending back an access denied response to the desktop search tool if the control instruction was issued by the desktop search tool.

Furthermore, in this invention, names of control instructions issued by the desktop search tool are stored beforehand, and are compared with the control instruction thus received so as to effectively determine if the control instruction came from the desktop search tool.

The data security system of this invention further has a desktop search tool control instruction table pre-stored therein. The desktop search tool control instruction table stores control instruction names of the desktop search tool. Accordingly, in step (B), a control instruction name of the control instruction thus received is compared to check if it matches with the control instruction names of the desktop search tool to determine if the control instruction was issued by the desktop search tool. Moreover, the desktop search tool control instruction can be updated at appropriate times to reflect changes in the desktop search tool.

Furthermore, in the data security method for preventing a desktop search tool from exposing encrypted data of the present invention, when the data security system is installed, preset file data, such as encrypted data files, file folders or codes of a virtual secure disk, that are not to be indexed by the desktop search tool will be actively added into a system registry of the desktop search tool, thereby preventing the situation of the encrypted data being indexed from occurring in the future.

Therefore, the data security method for preventing a desktop search tool from exposing encrypted data of the present invention comprises the following steps:
(A) providing a data security system, the data security system having system file data of the data security system, and adding the system file data of the data security system into a system registry of the desktop search tool; and
(B) detecting if there has been a change in the system file data of the data security system in the system registry of the desktop search tool, and adding the system file data of the data security system into the system registry of the desktop search tool upon detecting that there has been a change in the system file data.

Moreover, in order to prevent secure data from being undesirably exposed due to installation of a new desktop search tool, this invention periodically searches for a newly installed desktop search tool and, upon finding the newly installed desktop search tool, automatically adds the system file data of the data security system into a system registry of the newly installed desktop search tool, thereby ensuring security of secure data.

Furthermore, in the data security method for preventing a desktop search tool from exposing encrypted data of the present invention, when a control instruction is received, index removal for the desktop search tool is automatically executed for a file data portion of the control instruction so as to delete data previously indexed and backed up by the desktop search tool, thereby achieving the effect of better security for data.

Therefore, the data security method for preventing a desktop search tool from exposing encrypted data of the present invention comprises the following steps:
(A) providing a data security system with a file encryption/decryption function; and
(B) when the data security system receives a control instruction having a control command and a file data portion, executing an index removal procedure for the desktop search tool according to the file data portion of the control instruction so as to remove data corresponding to the file data portion from the desktop search tool, and encrypting/decrypting the data corresponding to the file data portion of the control instruction according to the control command.

Furthermore, activation of a preview function of the desktop search tool is periodically inspected in the present invention and, upon finding that the preview function is activated, the preview function is deactivated, thereby ensuring that the preview function of the desktop search tool is normally deactivated.

In this invention, presence of a machine code corresponding to the preview function of the desktop search tool is inspected to determine if the preview function is activated, and the machine code is deleted to deactivate the preview function.

Therefore, in the present invention, through automatic addition of the system file data of the data security system into the system registry of the desktop search tool, through automatic execution of an index removal procedure during data encryption/decryption, and through automatic deactivation of the preview function of the desktop search tool, the desktop search tool can be prevented from indexing or backing up encrypted data, and data corresponding to the encrypted data can be removed from the desktop search tool, thereby achieving the effects of enhanced security and privacy.

Other features and advantages of the present invention will become apparent in the following detailed description of the preferred embodiments with reference to the accompanying drawings, of which:
Figures 1 to 3 illustrate exemplary screen pages of a conventional desktop search tool;
Figure 4 is a schematic block diagram of the first preferred embodiment of a data security system for preventing a desktop search tool from exposing encrypted data according to the present invention;
Figure 5 is a flowchart of the first preferred embodiment of a data security method according to the present invention;
Figure 6 is an exemplary black list of files excluded from indexing in the first preferred embodiment;
Figure 7 illustrates an index removal procedure in the first preferred embodiment;
Figure 8 is a schematic block diagram of the second preferred embodiment of a data security system for preventing a desktop search tool from exposing encrypted data according to the present invention;
Figure 9 is a flowchart illustrating how system file data of the data security system of the second preferred embodiment are added into a system registry automatically upon initial installation of the data security system;
Figure 10 is a flowchart illustrating the second preferred embodiment of a data security method according to the present invention;
Figure 11 is a schematic block diagram of the third preferred embodiment of a data security system for preventing a desktop search tool from exposing encrypted data according to the present invention; and
Figure 12 is a flowchart of the third preferred embodiment of a data security method according to the present invention.

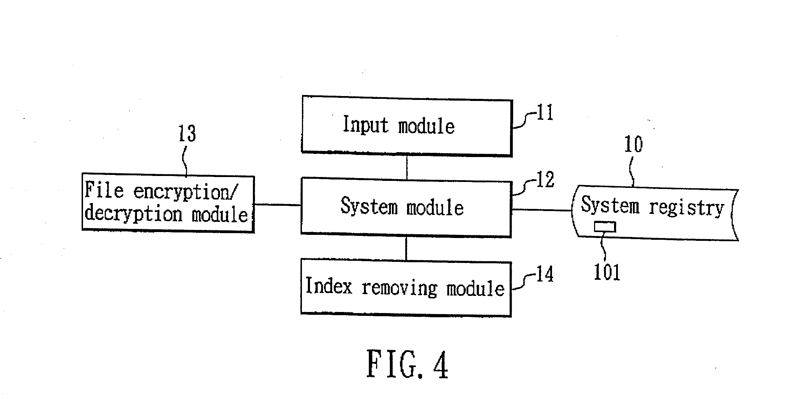

Referring to Figure 4, the first preferred embodiment of a data security system for preventing a desktop search tool from exposing encrypted data according to the present invention is embodied in a file encryption/decryption system, and includes an input module 11, a system module 12, a file encryption/decryption module 13, and an index removing module 14. The data security system of this embodiment is a program that can be recorded in a storage medium and can be installed in a computer for execution. In this embodiment, it is assumed that the data security system is already installed in a computer, and that the computer is installed with one or more desktop search tools.

The input module 1,1 provides an input interface to enable the user to input a control instruction (i.e., a control instruction related to encrypted data) to the system module 12. The control instruction can be an encrypt file control instruction or a decrypt file control instruction. Aside from an encrypt/decrypt command, the control instruction further includes a file data portion, which is a file name of data selected for encryption by the user and a file path to a file storage position. The data can be one or more files, one or more file folders, or a combination of files and file folders. In this embodiment, the input module 11 is integrated into an operating system of the computer, and provides a Windows file manager tool bar plug-in module (including file encrypt/decrypt buttons) and a Windows mouse right key menu function expansion module (including file encryption/decryption menus). Therefore, users can input the encrypt file control instruction or the decrypt file control instruction to encrypt/decrypt selected files by clicking on the file encrypt or file decrypt button or by using the mouse to select the file encryption or decryption menu.

Upon receiving the control instruction, the system module 12 acquires the file data portion of the control instruction and sends the same to the file encryption/decryption module 13 and the index removing module 14. The system module 12 contains system file data of the data security system. The system file data are file data preset to need protection and to be excluded from being indexed and backed up, such as file names and paths of encrypted data folders, etc.

It is noted that, when a current desktop search tool, such as the Google desktop search tool, is installed in a Computer, a corresponding system registry 10 will be generated in the computer to store relevant setup data of the desktop search tool. The system registry 10 includes a black list 101 of files excluded from indexing, which records data to be excluded from being indexed and backed up. Each time the desktop search tool is activated, the black list 101 is read, and the recorded file paths and file folders excluded from indexing are loaded into a memory so that the data corresponding thereto will not be indexed and backed up.

In order to prevent encrypted data from being exposed by the desktop search tool, when the data security system of this embodiment is installed, the system module 12 will automatically append the system file data of the data security system to the black list 101 of the system registry 10 so that the desktop search tool will cease to index data that are already encrypted. After installation, the system module 12 will monitor changes in the system file data of the data security system in the black list 101, and in case a change has occurred, the system module 12 will once again add the system file data of the data security system into the black list 101.

In the following example, the Google desktop search tool is used to illustrate how the system module 12 appends the system file data of the data security system to the black list 101. The black list 101 is a key in the system registry 10, and the key position is HKEY_CURRENT_USER\Software\Google\Google Desktop \Preferences\blacklist-6. Data storage format of the key is arranged according to the following scheme:

Total number of stored items n(4 bytes) + length of first item (4 bytes) + value of first item + ... + length of nth item (4 bytes) + value of nth item (the number n is set according to the number of data items in the black list 101).

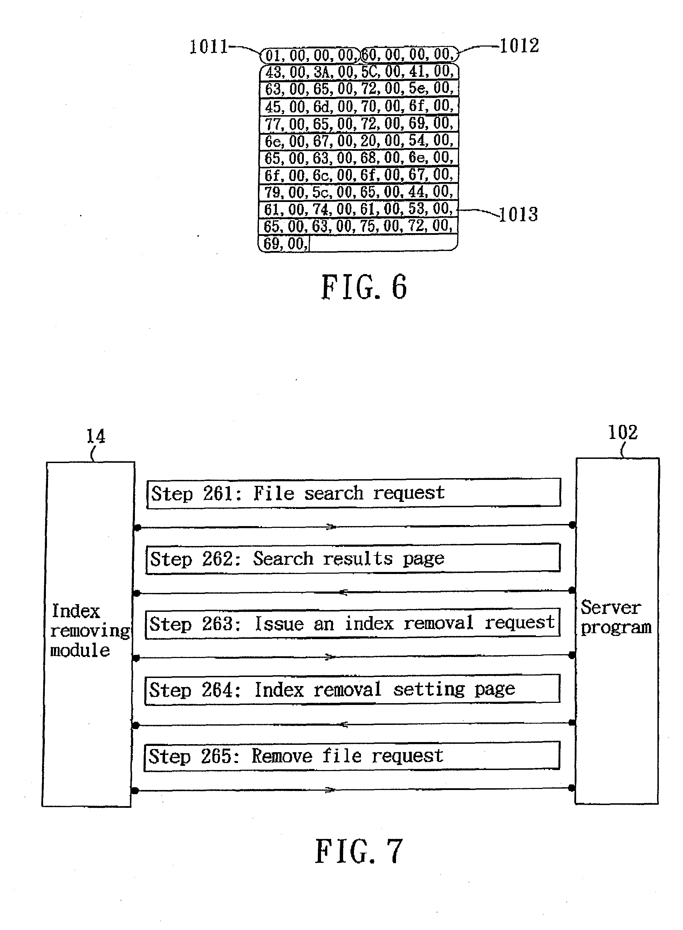

In the following example, file data of C:\Acer\Empowering Technology\eDataSecurity\Temp is to be appended into the black list 101. As shown in Figure 6, the total number 1011 of stored items is 01,00,00,00, and is followed by the length 1012 of an item of data, e.g., 60,00,00,00, and the value 1013 of the item. It should be noted that the key is stored in a hexadecimal manner, and the value of a least significant byte of a number is placed at the left, which is opposite to the usual writing practice.

It is also noted that some current desktop search tools, such as the Microsoft Windows desktop search tool, provide a preview function. Therefore,' in order to prevent exposure of plaintext content of encrypted data that was previously indexed and backed up once the preview function of the desktop search tool is activated, when the data security system is installed in a computer, the system module 12 first inspects if the preview function of the desktop search tool is activated. If activated, the system module 12 will deactivate the preview function to eliminate the possibility of exposure of the encrypted data.

In order to prevent exposure by the desktop search tool of data content in the form of plaintext data that was previously indexed and backed up, the index removing module 14 is responsible for deleting from the database of the desktop search tool the data content that was previously indexed and backed up. In this embodiment, the index removing module 14 searches the database of the desktop search tool for file content corresponding to the file data portion of a control instruction. In case there is a corresponding file content, the index removing module 14 will request the desktop search tool to delete the file content (to be described in greater detail in the succeeding paragraphs).

When the system module 12 receives a control instruction, the control instruction is sent to the file ehcryption/decryption module 13 and the index removing module 14. According to the control instruction, the file encryption/decryption module 13 encrypts/decrypts data corresponding to the file data portion of the control instruction. The index removing module 14 executes an index removal procedure for the file data portion of the control instruction when appropriate. Since encryption/decryption techniques can be readily appreciated by those skilled in the art, and since the improvement of the present invention does not reside in the same, further details thereof will be omitted herein. In addition, the order of execution of the tasks of the file encryption/decryption module 13 and the index removing module 14 can be adjusted according to design requirements, and the tasks may be executed at the same time. The index removing module 14 can be configured such that the index removal procedure is executed whenever the control instruction is one of the encrypt file control instruction and the decrypt file control instruction. In the following example to illustrate this embodiment, the task of the index removing module 14 starts when the file encryption/decryption module 13 completes the data encryption/decryption, and the index removing module 14 executes the index removal procedure when the control instruction is the encrypt file control instruction.

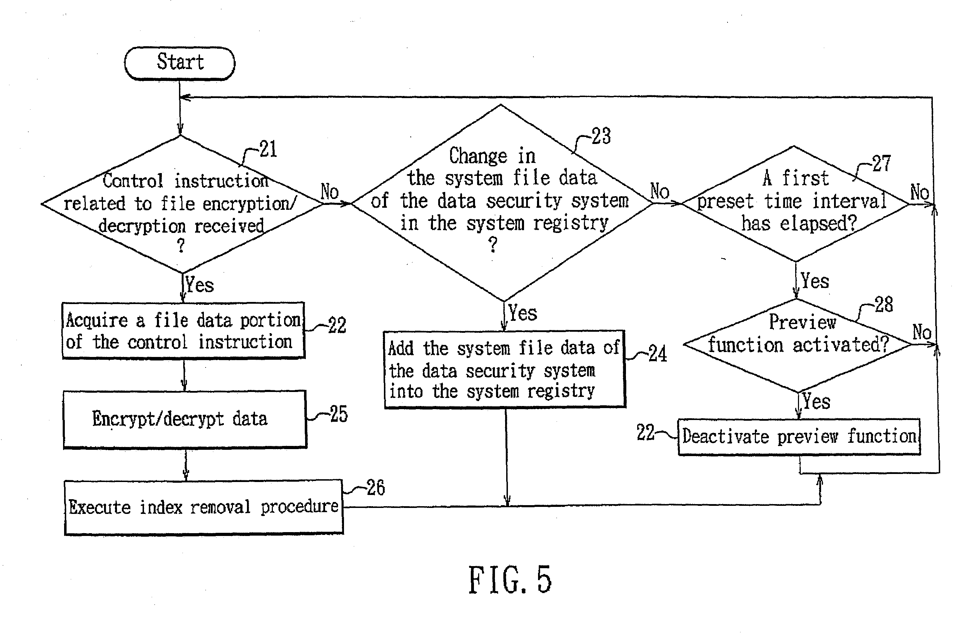

The operational flow of the method of this embodiment will now be described with reference to Figure 5. It is noted that when the input module 11 receives a control instruction, the control instruction will be sent to the system module 12 for processing.

In step 21, the system module 1.2 determines if a control instruction related to file encryption/decryption is received from the input module 11, i.e., the control instruction is an encrypt file control instruction or a decrypt file control instruction. If the determination result in step 21 is affirmative, the flow proceeds to step 22. Otherwise, if the determination result in step 21 is negative, the flow proceeds to step 23.

In step 22, the system module 12 first acquires the file data portion of the control instruction, and sends the same to the file encryption/decryption module 13 and the index removing module 14. Subsequently, in step 25, the file encryption/decryption module 13 performs encryption/decryption of data content corresponding to the file data portion of the control instruction.

In step 23, the system module 12 determines if there has been a change in the system file data of the data security system in the black list 101 of the system registry 10, i.e., determines if the system file,data of the data security system is present in the black list 101. If the determination result in step 23 is affirmative, step 24 is executed, whereat the system module 12 once again adds the system file data of the data security system into the black list 101.

In particular, the current operating system of a computer will detect if the key of the black list 101 was changed by the user or by other programs. In this embodiment, the system module 12 requests the operating system to notify the former upon detection of the change by the latter. Upon receipt by the system module 12 of the notification from the operating system, the system file data of the data security system will be compared with the current black list 101 to determine if the system file data of the data security system in the black list 101 was changed, i.e., if there is excluded data. If affirmative, the system module 12 will first duplicate the content of the current black list 101 and, after combining with the system file data of the data security system, rewrites updated data into the black list 101. On the other hand, if the determination result in step 23 is negative, the flow proceeds to step 27. After step 24 is ended, the flow jumps back to step 21.

After step 25 is executed, the flow proceeds to step 26, whereat the index removing module 14 executes the index removal procedure. In this example, the index removing module 14 executes the index removal procedure when the control instruction is the encrypt file control instruction, i.e., the index removing module 14 executes the index removal procedure only after data encryption. After step 24 is executed, the flow jumps back to step 21. The index removal procedure will now be illustrated using the Google desktop search tool and with reference to Figure 7. It should be noted herein that the design of the Google desktop search tool adopts a client-server framework, HTTP is the transmission protocol between the client and the server, each item of operational settings of the desktop search tool is required to be completed on a browser, and requests are generated for a server program 102 of the desktop search tool. Therefore, in this example, the index removing module 14 simulates user activity to generate a HTTP request that is transmitted to the Google desktop search tool for searching and deleting an index to data content corresponding to the file data portion of the control instruction. In this example, since the Google desktop search tool server program 102 is set to be installed at a local end (127.0.0.1), and the connection port is 4664, each HTTP request issues a message to this destination.

Initially, in step 261, the index removing module 14 first issues a HTTP file search request for the file data portion of the control instruction to the server program 102. The format of the file search request is as follows:
http://127.0.0.1:4664/search?q=filename&flags=8& num=display number of each page &s=Session key
wherein the Google desktop search tool stores the Session key in the search_url of HKEY_CURRENT_USER\ Software\Google\Google Desktop\API, and the index removing module 14 will automatically acquire the Session key therefrom.

As an example, if a file name "del_index.txt" is to be searched, and the Session key is assumed to be BIidQSkMmGAZe9EEXeLns4ZObWA, the content of the file search request will be:
http://127.0.0.1:4664/search?q=del_index%2Etxt&f lags=8&num=10&s=BIidQSkMmGAZe9EEXeLns4ZObWA

Subsequently, in step 262, after the server program 102 receives the file search request, it will respond with a search results page to the index removing module 14. A search results page usually includes an option for index removal, and the format of link address (url) of this option is:
http://127.0.0.1:4664/search?q=filename&flags=9& num=display number of each page&s=Session key
wherein the server program 102 will generate a different Session key each time a request is issued.

As an example, continuing with the above example, the link address of the option for index removal of the search response of the Google server program 102 is
http://127.0.0.1:4664/search?q=del_index.txt&fla gs=9&num=10&s=Nk0-aVPbD07mC1eYLc9zUfrhFyg

Thereafter, in step 263, the index removing module 14 issues an index removal request. The index removing module 14 requests a link to the aforementioned address of the option for index removal. Then, in step 264, the server program 102 responds with an index removal setting page.

Finally, in step 265, the index removing module 14 further responds with a remove file request. In particular, the index removing module 14 will simulate file selection and clicking on a remove button.

The index removing module 14 generates a click event, i.e., file selection, in the index removal setting page, and transmits a HTTP POST request to the server program 102. The format of the transmitted message is as follows:
message-header is Content-Type:application/x-www-form-urlencoded CRLF Host:127.0.0.1:4664 CRLF
message-option is del=code of checkbox to be deleted
wherein CRLF is change line, and the checkbox code is recorded in the index removal setting page sent by the Google server program 102.

As an example, continuing with the above example, the HTTP POST request thus generated is
message-header is Content-Type:application/x-www-form-urlencoded CRLF Host:127.0.0.1:4664 CRLF
message-option is del=d99784

At the same time, the index removing module 14 simulates a HTTP request generated as a result of clicking on the remove button in the index removal setting page, thereby completing notifying the server program 102 of the data index to be deleted. The fixed format of the link address is:
http://127.0.0.1:4664/delete&s=Session key
wherein the Session key is recorded in the index removal setting page.

As an example, continuing with the above example, the HTTP request thus generated is
http://127.00.1:4664/delete&s=Ne-RWipphsS_jyIyJ_ UOJNWk9Xc

In step 265, the index removing task is completed after the index removing module 14 generates the remove file request that includes the click event request and the remove button click request. Accordingly, whenever there is data encrypted, the index removing module 14 of this embodiment will automatically request the desktop search tool to delete indexed data, thereby preventing exposure of encrypted data and enhancing security of encrypted data.

Furthermore, for desktop search tools with the preview function, in order to prevent reactivation of the preview function upon reinstallation of the desktop search tool by the user or when the previously deactivated preview function of the desktop search tool is activated, this embodiment will periodically inspect whether the preview function is activated, and will deactivate the preview function upon detection of its activation.

Therefore, in step 27 of Figure 5, the system module 12 first determines if a first preset time interval has elapsed since a previous inspection. If the determination result in step 27 is affirmative, the flow proceeds to step 28. On the other hand, if the determination result in step 27 is negative, the flow jumps back to step 21.

In step 28, the system module 12 inspects if the preview function is activated. If the determination result in step 28 is affirmative, the flow proceeds to step 29 to deactivate the preview function. On the other hand, if the determination result in step 28 is negative, the flow jumps back to step 21. The flow jumps back to step 21 after step 29 is ended. Taking the Windows desktop search tool as an example, the search results preview function of the Windows desktop search tool is controlled by a machine code (previewers), the location of which is HKEY_CURRENT_USER\Software\RSSearch\ContentIndex Common\Previewers. Therefore, in this example, the system module 12 inspects in step 28 the presence of the machine code in the abovementioned location to determine if the preview function is activated. If the machine code is present, the system module 12 actively deletes the machine code in step 29 to deactivate the preview function.

It is noted that the order of execution of steps 21, 23 and 27 can be adjusted according to design requirements, or steps 21, 23 and 27 can be executed at the same time. The same is also true for the order of execution of steps 25 and 26.

In this embodiment, when data is encrypted into encrypted data, the data security system will automatically request the desktop search tool to remove data that have been indexed or backed up so as to ensure that source data (i.e., plaintext data) of the encrypted data previously indexed by the desktop search tool would not be exposed. At the same time, for desktop search tools with a preview function, the data security system periodically confirms if the preview function is in a deactivated state, thereby achieving the effect of enhanced security.

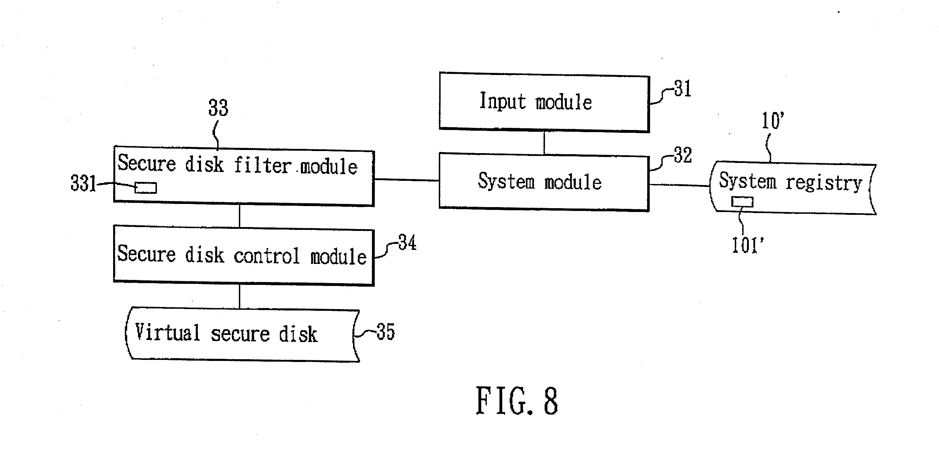

Furthermore, aside from a file encryption/decryption system, the data security system for preventing a desktop search tool from exposing encrypted data according to the present invention can also be realized as a virtual secure disk system. As shown in Figure 8, the second preferred embodiment of a data security system according to this invention is embodied in a virtual secure disk system, and includes an input module 31, a systemmodule 32, a secure disk filter module 33, a secure disk control module 34, and a virtual secure disk 35. The data security system of this embodiment is a program that can be stored in a storage medium and can be installed in a computer. It is presumed herein that the data security system is installed in a computer.

The virtual secure disk 35 is a storage area configured in storage equipment of the computer, and provides physical files of secure data for access by the secure disk control module 34. The input module 31 provides an input interface for an external portion (such as the user or other application programs in the computer) to input control instructions (such as control instructions to activate the secure disk, access the secure disk or close secure files) for the system module 32. In this embodiment, the input module 31 has a Windows file manager toolbar plug-in module (including activate/close buttons to control the secure disk), a secure disk function interface for user operation, and an application program interface for external application programs to input control instructions.

The system module 32 is for sending the control instructions to the secure disk filter module 33. In addition, the system module 32 contains file data of the data security system, such as disk code of the virtual secure disk 35, paths of encrypted data file folders and file folder names, installation path and name of the data security system in the computer, etc. When the data security system of this embodiment is installed in a computer, the system module 32 detects if the computer is installed with a desktop search tool. If affirmative, the system module 32 adds the system file data of the data security system into the black list 101' of files excluded from indexing in the system registry 10' of the desktop search tool. The system module 32 of this embodiment is similar to that of the first embodiment, and the system file data is added into the machine code of the black list 101' via a path with a hexadecimal format.

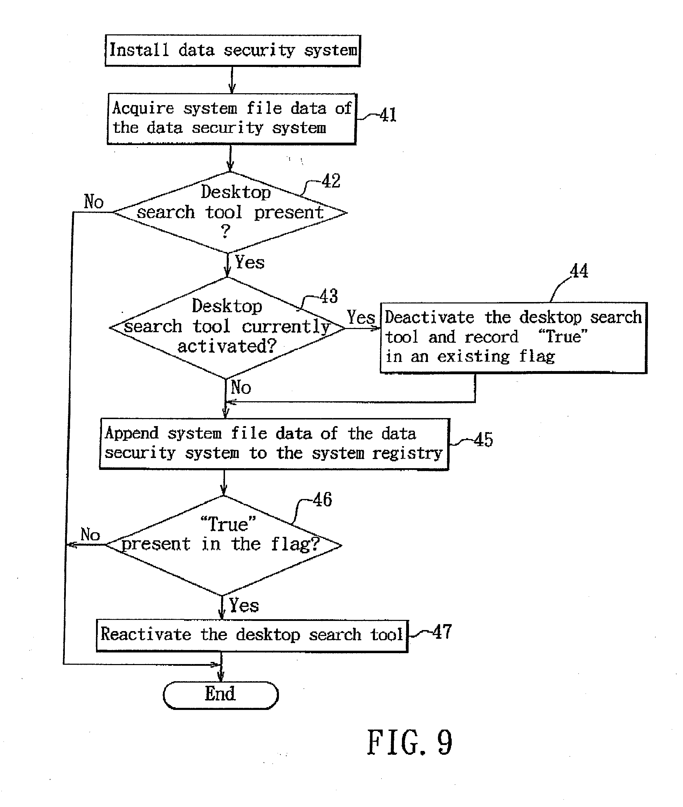

The flow of how the system module 32 adds the system file data of the data security system into the black list 101' will now be described with reference to Figure 9.

After completing installation of the data security system in a computer, step 41 is executed, whereat the system module 32 acquires the system file data of the data security system. Then, in step 42, the system module 32 inspects the computer to determine if a desktop search tool (such as the Google desktop search tool) is present. If the determination result in step 42 is affirmative, the flow proceeds to step 43. On the other hand, if the determination result in step 42 indicates that no desktop search tool is present, the flow is ended.

In step 43, the system module 32 first determines if the desktop search tool is currently activated. If the determination result in step 43 is affirmative, step 44 is executed, whereat the system module 32 first deactivates the desktop search tool and records "True" in an existing flag, "False" being originally present in the flag. After step 44 is ended, the flow goes to step 45. On the other hand, if the determination result in step 43 is negative, step 45 is executed, where the system file data of the data security system are appended to the black list 101', of the system registry 10'.

Finally, in step 46, it is determined if "True" is present in the flag. If the determination result in step 46 is affirmative, step 47 is executed to reactivate the desktop search tool. After step 47 is ended, the task of appending the system file data of the data security system to the system registry 10' by the system module 32 is completed. On the other hand, if the determination result in step 46 is negative, the flow is ended. Accordingly, the desktop search tool will not index the data security system and any data therein, and data content in the data security system file folder will not be backed up.

Moreover, in order to enhance security, the system module 32 of this embodiment will periodically inspect if there is a newly installed desktop search tool, and upon detection of the same, the system module 32 will actively write the system file data of the data security system into the system registry 10'. In addition, each time the data security system is activated by the user, it is confirmed if the data security system is present in the system registry 10'. If not present, the system file data of the data security system will be once again appended to the system registry 10', thereby enhancing privacy of data in the virtual secure disk 35.

The secure disk control module 34 accesses data in the virtual secure disk 35 and encrypts/decrypts the data in the virtual secure disk 35 according to the control instruction. In this embodiment, the secure disk control module 34 is a virtual secure disk driver program having an algorithm for accessing physical virtual secure disk data and working to call the algorithm at appropriate times so as to be responsible for the function of physical file data access.

Different from the prior art where the secure disk directly passes the control instruction to the secure disk control module for execution, in this embodiment, the control instruction is first sent to the secure disk filter module 33 for determination. The secure disk filter module 33 filters out the control instructions (e.g., process name) of the desktop search tool such that control instructions not belonging to the desktop search tool are transmitted to the secure disk control module 34 for processing, and such that control instructions from the desktop search tool are blocked, thereby effectively blocking access to the virtual secure disk 35 by the desktop search tool.

The names of control instructions of current desktop search tools can be analyzed beforehand. Examples of control instruction names of the Windows desktop search tool include windowssearchindexer.exe and windowssearchfilter.exe. Examples of control instruction names of the AOL desktop search tool include aolsoftware.exe and desktopsearchapp.exe. Examples of control instruction names of the Yahoo desktop search tool include yahoodesktopsearch.exe, textextractor.exe, and copernicdesktopsearch.exe. Therefore, in this embodiment, the secure disk filter module 33 stores a desktop search tool control instruction table 331 that records various control instruction names of the desktop search tools. Accordingly, when the secure disk filter module 33 receives a control instruction, it will first make a comparison to find if there is a matching control instruction name in the desktop search tool control instruction table 331. If there is a match, an access denied response (STATUS_ACCESS_DENIED) is sent back, and processing is ended. On the other hand, if there is no match, the control instruction is sent to the secure disk control module 34 for processing. Of course, the content of the desktop search tool control instruction table 331 can be periodically updated.

In this embodiment, the secure disk filter module 33 is a base layer of the data security system, and is a driver program built on the virtual secure disk driver program. Therefore, all control instructions for the virtual secure disk driver program will first go through the secure disk filter module 33. The secure disk filter module 33 extracts the name of the control instruction requesting access to the virtual secure disk 35, and inspects if it is found in the desktop search tool control instruction table 331 to confirm if the control instruction was issued by the desktop search tool. Upon affirmative confirmation, the secure disk filter module 33 sends back an access denied response for the control instruction, and processing is ended. As a result, the desktop search tool is unable to index the virtual secure disk 35 and is unable to backup any data content in the virtual secure disk 35 into the private database thereof, thereby ensuring the individuality and confidentiality of the data in the virtual secure disk 35.

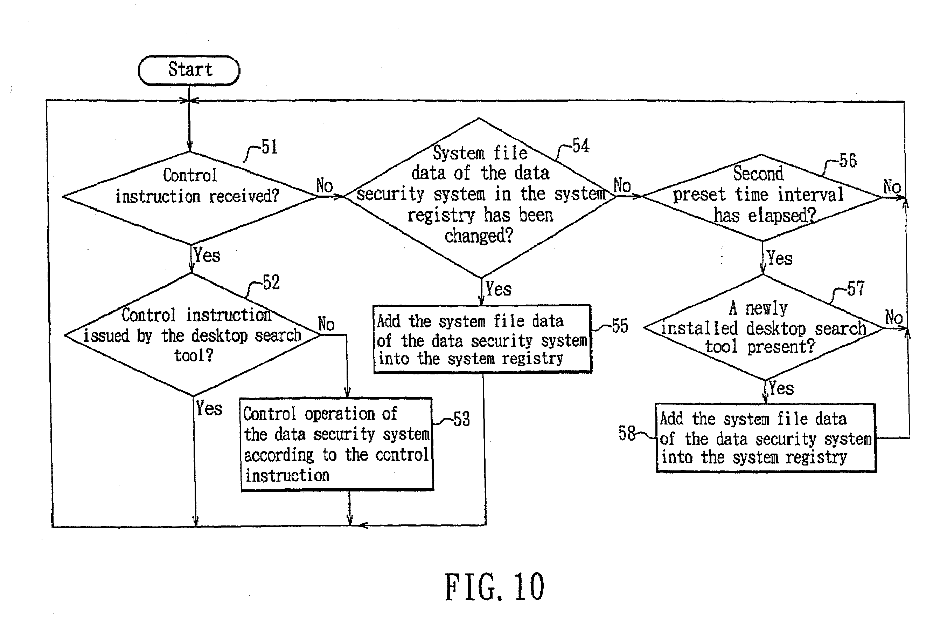

The operational flow of this embodiment will now be described with reference to Figure 10.

Initially, in step 51, the systemmodule 32 determines if a control instruction from the input module 31 is received thereby. If the determination result in step 51 is affirmative, the systemmodule 32 sends the control instruction to the secure disk filter module 33 to execute step 52. On the other hand, if the determination result in step 51 is negative, the flow jumps to step 54.

In step 52, the secure disk filter module 33 first determines if the control instruction was issued by the desktop search tool, i.e., compares the control instruction to see if it matches any one of the control instruction names in the desktop search tool control instruction table 331. If the determination result in step 52 is affirmative, the secure disk filter module 33 sends back an access denied response to the desktop search tool, and the flow jumps back to step 51. On the other hand, if the determination result in step 52 is negative, the secure disk filter module 33 transmits the control instruction to the secure disk control module 34, and the flow continues to step 53, whereat the secure disk control module 34 operates the data security system according to the control instruction, such as activate the data security system, access data in the virtual secure disk 35, encrypt/decrypt data, deactivate the data security system, etc. After step 53 is ended, the flow jumps back to step 51.

In step 54, it is determined if the system file data of the data security system in the black list 101' of the system registry 10' has been changed. If the determination result in step 54 is affirmative, step 55 is executed, whereat the system module 32 once again adds the system file data of the data security system into the black list 101'. If the determination result in step 54 is negative, the flow continues to step 56. After step 55 is ended, the flow jumps back to step 51.

In step 56, the system module 32 first determines if a second preset time interval has elapsed since a previous inspection. If the determination result in step 56 is affirmative, step 57 is executed, whereat the system module 32 searches the computer to determine the presence of a newly installed desktop search tool. If the determination result in step 56 or step 57 is negative, the flow jumps back to step 51. If the determination result in step 57 is affirmative, step 58 is executed, whereat the system module 32 adds the system file data of the data security system into the black list 101' of the system registry 10'. After step 58 is ended, the flow jumps back to step 51. It is noted herein that the order of execution of steps 51, 54 and 56 can be adjusted according to practical design requirements, or steps 51, 54 and 56 can be executed at the same time.

Therefore, through adding the system file data of the data security system into the system registry 10', and by using the secure disk filter module 33 to block control instructions from the desktop search tool, the data security system in the form of a virtual secure disk system of this embodiment can ensure that the desktop search tool will not index and backup secure data in the virtual secure disk 35, thereby enhancing security of confidential data.

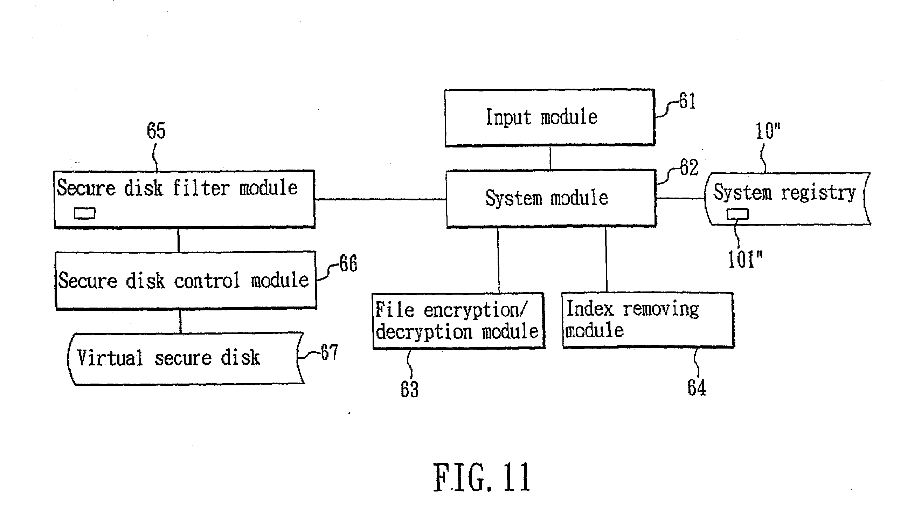

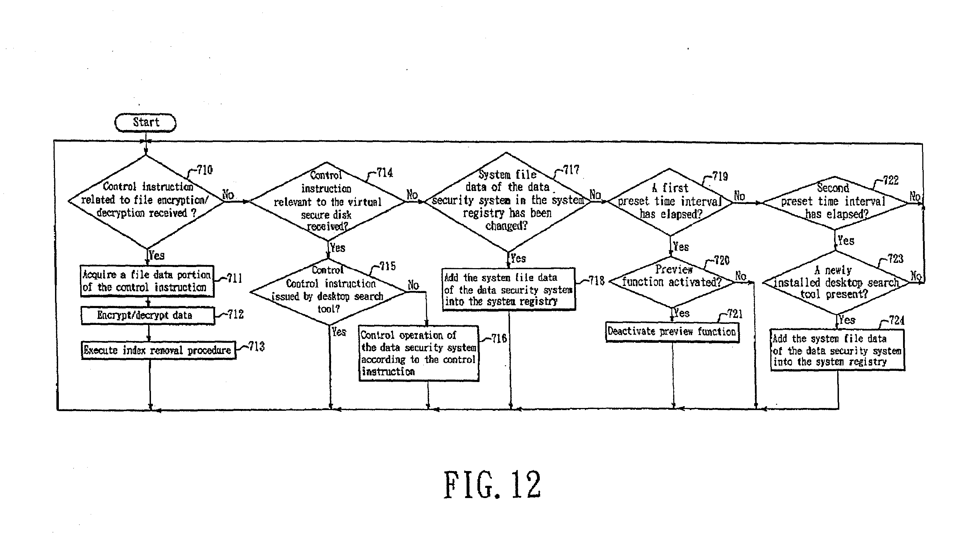

In addition, the data security system of this embodiment can be used together with the deactivation of the preview function of the desktop search tool and the index removal procedure of the aforementioned first preferred embodiment. Furthermore, the data security system of this embodiment can be integrated with the file encryption/decryption function of the aforementioned first preferred embodiment. Figure 11 illustrates the third preferred embodiment of a data security system according to the present invention, which is a data security system having file encryption/decryption functionality and virtual secure disk functionality. The data security system of this embodiment includes an input module 61, a system module 62, a file encryption/decryption module 63, an index removing module 64, a secure disk filter module 65, a secure disk control module 66, and a virtual secure disk 67. The functions of the various components, which are similar to those of the components in the previous two embodiments, will become apparent in the following description of the operational flow with reference to Figure 12.

Initially, in step 710, the system module 62 determines if a control instruction relevant to file encryption/decryption is received from the input module 61. If the determination result in step 710 is affirmative, in step 711, the system module 62 first acquires the file data portion of the control instruction, and in step 712, sends the control instruction to the file encryption/decryption module 63' so that the file encryption/decryption module 63 encrypts/decrypts data according to the control instruction. After step 712 is ended, step 713 is executed, whereat the index removal procedure is executed to delete data corresponding to the file data portion and stored or indexed by the desktop search tool. After step 713 is ended, the flow jumps back to step 710.

If the determination result in step 710 is negative, the flow continues to step 714, whereat the system module 62 determines if a control instruction relevant to the virtual secure disk is received from the input module 61. If the determination result in step 714 is affirmative, the flow proceeds to step 715, whereat the system module 62 passes the control instruction to the secure disk filter module 65 to determine if the control instruction was issued by the desktop search tool. If the determination result in step 715 is affirmative, the flow jumps back to step 710 after the secure disk filter module 65 sends back an access denied response to the desktop search tool. If the determination result in step 715 is negative, step 716 is executed, whereat the secure disk control module 66 controls operation of the data security system, such as data access of the virtual secure disk, etc., according to the control instruction. After step 716 is ended, the flow jumps back to step 710.

If the determination result in step 714 is negative, the flow continues to step 717, whereat it is determined if the system file data of the data security system in the black list 101" of the system registry 10" has been changed. If the determination result in step 717 is affirmative, step 718 is executed, whereat the system module 62 once again adds the system file data of the data security system into the black list 101". If the determination result in step 717 is negative, the flow proceeds to step 719. After step 718 is ended, the flow jumps back to step 710.

In step 719, the system module 62 determines if a time interval since a previous inspection of whether the preview function of the desktop search tool is activated has reached a first preset time interval. If the determination result in step 719 is negative, the flow proceeds to step 722. If the determination result in step 719 is affirmative, step 720 is executed to determine if the preview function of the desktop search tool is activated. If it is determined by the system module 62 in step 720 that the preview function is activated, step 721 is executed to deactivate the preview function. If the determination result in step 720 is negative, the flow jumps back to step 710. After step 721 is ended, the flow jumps back to step 710.

In step 722, the system module 62 determines if a time interval since a previous search of the computer for a newly installed desktop search tool has reached a second preset time interval. If the determination result in step 722 is affirmative, step 723 is executed, whereat the system module 62 searches the computer to find if there is a newly installed desktop search tool. If there is a newly installed desktop search tool, step 724 is executed, whereat the system file data of the data security system is added into the system registry 10" of the newly installed desktop search tool. On the other hand, if the determination result in step 722 or step 723 is negative, the flow jumps back to step 710. After step 724 is ended, the flow jumps back to step 710.

It is noted that the order of execution of steps 710, 714, 717, 719 and 722 can be adjusted according to design requirements, and steps 710, 714, 714, 717, 719 and 722 can be executed simultaneously.

According to the foregoing, the system file data of the data security system is automatically added into the system registry 10, 10', 10" of the desktop search tool in the present invention, so that the desktop search tool will not index or back up encrypted data, thereby ensuring security. In addition, this invention further executes an index removal procedure automatically so as to remove data corresponding to encrypted data in the desktop search tool, and automatically deactivates the preview function of the desktop search tool, thereby ensuring that data previously indexed and backed up by the desktop search tool would not be exposed, thereby achieving the effect of enhancing privacy.

## Claims

1. A data security method for preventing a desktop search tool from exposing encrypted data, comprising the following steps:
(A) providing a data security system with a secure disk function; and
(B) when the data security system receives a control instruction, determining if the control instruction was issued by the desktop search tool, controlling operation of the data security system according to the control instruction if the control instruction was not issued by the desktop search tool, and sending back an access denied response to the desktop search tool if the control instruction was issued by the desktop search tool.

2. The data security method as claimed in claim 1, wherein the data security system has a control instruction name of the desktop search tool pre-stored therein, and step (B) includes comparing to check if a control instruction name of the control instruction matches the control instruction name of the desktop search tool in order to determine if the control instruction was issued by the desktop search tool.

3. The data security method as claimed in claim 1, wherein step (A) includes detecting presence of the desktop search tool, adding system file data of the data security system into a system registry of the desktop search tool upon detecting the presence of the desktop search tool, and ending processing if the presence of the desktop search tool was not detected.

4. The data securitymethod as claimed in claim 3, wherein step (A) further includes, upon detecting the presence of the desktop search tool,
checking if the desktop search tool is activated, and
if the desktop search tool is activated, deactivating the desktop search tool before adding the system file data of the data security system into the system registry.

5. The data security method as claimed in claim 4, wherein step (A) further includes, if the desktop search tool was deactivated before adding the system file data of the data security system into the system registry, reactivating the desktop search tool after adding the system file data of the data security system into the system registry.

6. The data security method as claimed in claim 3, wherein, in step (A), the system file data of the data security system is added into a black list of files excluded from indexing of the system registry.

7. The data securitymethod as claimed in claim 3, further comprising the steps:
detecting if there has been a change in the system file data of the data security system in the system registry of the desktop search tool, and adding the system file data of the data security system into the system registry of the desktop search tool upon detecting that there has been a change in the system file data.

8. The data security method as claimed in claim 1, further comprising the steps:
determining presence of a new desktop search tool at preset time intervals, and
upon determining that the new desktop search tool is present, adding system file data of the data security system into a system registry of the new desktop search tool.

9. A storage medium for causing a computer to execute a data security procedure, said storage medium being adapted to be loaded into the computer and being adapted for installing a data security system with a secure disk function in the computer, said data security procedure comprising the following steps:
(A) when the data security system receives a control instruction, determining if the control instruction was issued by the desktop search tool;
(B) sending back an access denied response to the desktop search tool if the control instruction is determined to be issued by the desktop search tool; and
(C) controlling operation of the data security system according to the control instruction if the control instruction is determined to be not issued by the desktop search tool.

10. The storage medium as claimed in claim 9, wherein step (A) of said data security procedure includes detecting presence of the desktop search tool, adding system file data of the data security system into a system registry of the desktop search tool upon detecting the presence of the desktop search tool, and ending processing if the presence of the desktop search tool was not detected.

11. The storage medium as claimed in claim 10, wherein said data security procedure further comprises the steps:
detecting if there has been a change in the system file data of the data security system in the system registry of the desktop search tool, and adding the system file data of the data security system into the system registry of the desktop search tool upon detecting that there has been a change in the system file data.

12. The storage medium as claimed in claim 10, wherein said data security procedure further comprises the steps:
determining presence of a new desktop search tool at preset time intervals, and
upon determining that the new desktop search tool is present, adding the system file data of the data security system into a system registry of the new desktop search tool.

13. A data security system for preventing a desktop search tool from exposing encrypted data, comprising:
a virtual secure disk for data access;
a secure disk filter module for receiving a control instruction input by a user and a control instruction from the desktop search tool and for filtering out the control instruction from the desktop search tool; and
a secure disk control module for receiving the control instruction filtered by said secure disk filter module and for performing tasks associated with said virtual secure disk according to the control instruction received thereby.

14. The data security system as claimed in claim 13, further comprising a system module for providing the control instructions to said secure disk filter module, for determining presence of a new desktop search tool at preset time intervals and, upon determining that the new desktop search tool is present, for adding system file data of the data security system into a system registry of the new desktop search tool.

15. The data security system as claimed in claim 13, wherein said secure disk filter module is stored with a desktop search tool control instruction table of control instruction names of the desktop search tool, said secure disk filter module comparing to check if a control instruction name of the control instruction received thereby matches the control instruction names in the desktop search tool control instruction table in order to determine if the control instruction was issued by the desktop search tool.

16. A data security method for preventing a desktop search tool from exposing encrypted data, comprising the following steps:
(A) providing a data security system, the data security system including system file data of the data security system, and adding the system file data of the data security system into a system registry of the desktop search tool; and
(B) detecting if there has been a change in the system file data of the data security system in the system registry of the desktop search tool, and adding the system file data of the data security system into the system registry of the desktop search tool upon detecting that there has been a change in the system file data.

17. The data security method as claimed in claim 16, further comprising the step:
(C) periodically inspecting if a preview function of the desktop search tool is activated and, if the preview function is activated, deactivating the preview function.

18. The data security method as claimed in claim 17, wherein activation of the preview function of the desktop search tool is controlled through a machine code, and step (C) includes inspecting presence of the machine code to determine if the preview function is activated and, upon inspecting that the machine code is present, deleting the machine code to deactivate the preview function.

19. The data security method as claimed in claim 16, further comprising the steps:
receiving a control instruction that has a control command and a file data portion; and
if the control instruction is a control instruction relevant to file encryption/decryption, encrypting/decrypting data corresponding to the file data portion of the control instruction according to the control instruction, and executing an index removal procedure for the file data portion of the control instruction so as to remove data corresponding to the file data portion of the control instruction from the desktop search tool, the index removal procedure including the following sub-steps:
(D-1) issuing a file search request for the file data portion of the control instruction to the desktop search tool, and receiving a search result generated by the desktop search tool in response to the file search request;
(D-2) issuing an index removal request to the desktop search tool according to the search result, and receiving an index removal setting result generated by the desktop search tool in response to the index removal request;
and
(D-3) issuing a remove file request to the desktop
search tool according to the index removal setting result.

20. The data security method as claimed in claim 19, wherein, in sub-step (D-1), the file search request is formed from a file name in the file data portion of the control instruction.

21. The data security method as claimed in claim 19, wherein the file search request, the index removal request and the remove file request are all in HTTP format.

22. The data security method as claimed in claim 20, further comprising the steps of:
if the control instruction is a control instruction relevant to a virtual secure disk, determining if the control instruction was issued by the desktop search tool,
if the control instruction was issued by the desktop search tool, sending back an access denied response to the desktop search tool and ending processing, and
if the control instruction was not issued by the desktop search tool, performing processing according to the control instruction.

23. The data security method as claimed in claim 16, further comprising the steps:
determining presence of a new desktop search tool at preset time intervals, and
upon determining that the new desktop search tool is present, adding the system file data of the data security system into a system registry of the new desktop search tool.

24. A storage medium for causing a computer to execute a data security procedure, said storage medium being adapted to be loaded into the computer and being adapted for installing a data security system in the computer, the data security system including system file data of the data security system, said data security procedure comprising the following steps:
(A) adding the system file data of the data security system into a system registry of the desktop search tool; and
(B) detecting if there has been a change in the system file data of the data security system in the system registry of the desktop search tool, and adding the system file data of the data security system into the system registry of the desktop search tool upon detecting that there has been a change in the system file data.

25. The storage medium as claimed in claim 24, wherein said data security procedure further comprises the step:
(C) periodically inspecting if a preview function of the desktop search tool is activated and, if the preview function is activated, deactivating the preview function.

26. The storage medium as claimed in claim 24, wherein said data security procedure further comprises the steps:
receiving a control instruction that has a control Command and a file data portion; and
if the control instruction is a control instruction relevant to file encryption/decryption, encrypting/decrypting data corresponding to the file data portion of the control instruction according to the control instruction, and executing an index removal procedure for the file data portion of the control instruction so as to remove data corresponding to the file data portion of the control instruction from the desktop search tool, the index removal procedure including the following sub-steps:
(D-1) issuing a file search request for the file data portion of the control instruction to the desktop search tool, and receiving a search result generated by the desktop search tool in response to the file search request;
(D-2) issuing an index removal request to the desktop search tool according to the search result, and receiving an index removal setting result generated by the desktop search tool in response to the index removal request; and
(D-3) issuing a remove file request to the desktop search tool according to the index removal setting result.

27. The storage medium as claimed in claim 26, wherein said data security procedure further comprises the steps of:
if the control instruction is a control instruction relevant to a virtual secure disk, determining if the control instruction was issued by the desktop search tool,
if the control instruction was issued by the desktop search tool, sending back an access denied response to the desktop search tool and ending processing, and
if the control instruction was not issued by the desktop search tool, performing processing according to the control instruction.

28. The storage medium as claimed in claim 24, wherein said data security procedure further comprises the steps:
determining presence of a new desktop search tool at preset time intervals, and
upon determining that the new desktop search tool is present, adding the system file data of the data security system into a system registry of the new desktop search tool.

29. A data security system for preventing a desktop search tool from exposing encrypted data, comprising:
an input module for input of a control instruction by a user, the control instruction having a control command and a file data portion;
a system module having system file data of the data security system that is added into a system registry of the desktop search tool at appropriate times, said system module receiving and outputting the control instruction; and
a file encryption/decryption module for receiving the control instruction from said system module and for encrypting/decrypting data corresponding to the file data portion according to the control instruction.

30. The data security system as claimed in claim 29, further comprising an index removing module for receiving the file data portion of the control instruction and for removing data corresponding to the file data portion of the control instruction from the desktop search tool.

31. The data security system as claimed in claim 30, further comprising:
a virtual secure disk for data access;
a secure disk filter module for receiving the control instruction from said system module and a control instruction from the desktop search tool and for filtering out the control instruction from the desktop search tool; and
a secure dis k control module for receiving the control instruction filtered by said secure disk filter module and for performing tasks associated with said virtual secure disk according to the control instruction received thereby;
wherein said system module sends a control instruction relevant to file encryption/decryption to said file encryption/decryption module and said index removing module, and sends a control instruction relevant to said virtual secure disk to said secure disk filter module.

32. The data security system as claimed in claim 29, wherein said system module periodically inspects if a preview function of the desktop search tool is activated and, if the preview function is activated, deactivates the preview function.

33. The data security system as claimed in claim 31, wherein said secure disk filter module determines if the control instruction received thereby was issued by the desktop search tool, sends the control instruction to the secure disk control module upon determining that the control instruction was not issued by the desktop search tool, and sends back an access denied response to the desktop search tool upon determining that the control instruction was issued by the desktop search tool.

34. The data security system as claimed in claim 29, wherein said system module determines presence of a new desktop search tool at preset time intervals and, upon determining that the new desktop search tool is present, adds the system file data of the data security system into a system registry of the new desktop search tool.

35. A data security method for preventing a desktop search tool from exposing encrypted data, comprising the following steps:
(A) providing a data security system with a file encryption/decryption function; and
(B) when the data security system receives a control instruction having a control command and a file data portion, executing an index removal procedure for the desktop search tool according to the file data portion of the control instruction so as to remove data corresponding to the file data portion from the desktop search tool.

36. The data security method as claimed in claim 35, wherein the index removal procedure in step (B) includes the following sub-steps:
(B-1) issuing a file search request for the file data portion of the control instruction to the desktop search tool, and receiving a search result generated by the desktop search tool in response to the file search request;
(B-2) issuing an index removal request to the desktop search tool according to the search result, and receiving an index removal setting result generated by the desktop search tool in response to the index removal request; and
(B-3) issuing a remove file request to the desktop search tool according to the index removal setting result.

37. The data security method as claimed in claim 36, wherein, in sub-step (B-1), the file search request is formed from a file name in the file data portion of the control instruction.

38. The data security method as claimed in claim 36, wherein the file search request, the index removal request and the remove file request are all in HTTP format.

39. The data security method as claimed in claim 35, wherein step (A) includes adding system file data of the data security system into a system registry of the desktop search tool.

40. The data security method as claimed in claim 35, wherein step (B) includes encrypting/decrypting data corresponding to the file data portion of the control instruction according to the control instruction.

41. The data security method as claimed in claim 35, further comprising the step:
(C) periodically inspecting if a preview function of the desktop search tool is activated and, if the preview function is activated, deactivating the preview function.

42. A storage medium for causing a computer to execute a data security procedure, said storage medium being adapted to be loaded into the computer and being adapted for installing a data security system with a file encryption/decryption function in the computer, said data security procedure comprising the following steps:
(A) receiving a control instruction having a control command and a file data portion; and
(B) executing an index removal procedure for the desktop search tool according to the file data portion of the control instruction so as to remove data corresponding to the file data portion from the desktop search tool.

43. The storage medium as claimed in claim 42, wherein the index removal procedure in step (B) includes the following sub-steps:
(B-1) issuing a file search request for the file data portion of the control instruction to the desktop search tool, and receiving a search result generated by the desktop search tool in response to the file search request;
(B-2) issuing an index removal request to the desktop search tool according to the search result, and receiving an index removal setting result generated by the desktop search tool in response to the index removal request; and
(B-3) issuing a remove file request to the desktop search tool according to the index removal setting result.

44. The storage medium as claimed in claim 42, wherein step (A) of said data security procedure includes adding the system file data of the data security system into a system registry of the desktop search tool.

45. The storage medium as claimed in claim 42, wherein step (A) of said data security procedure includes encrypting/decrypting data corresponding to the file data portion according to the control command of the control instruction.

46. A data security system for preventing a desktop search tool from exposing encrypted data, comprising:
an input module for input of a control instruction by a user, the control instruction having a control command and a file data portion; and
an index removing module for removing data corresponding to the file data portion from the desktop search tool.

47. The data security system as claimed in claim 46, further comprising a file encryption/decryption module for receiving the control instruction and for encrypting/decrypting data corresponding to the file data portion according to the control instruction.

48. The data security system as claimed in claim 46, further comprising a system module for adding system file data of the data security system into a system registry of the desktop search tool.

49. The data security system as claimed in claim 46, further comprising a system module for periodically deactivating a preview function of the desktop search tool.
